# EUROPÄISCHE PATENTSCHRIFT

(11) **EP 0 572 598 B1**
(45) Veröffentlichungstag und Bekanntmachung des Hinweises auf die Patenterteilung: **18.10.1995**
(21) Anmeldenummer: 92924711.2
(22) Anmeldetag: 10.12.1992
(51) Int. Cl.: F16B 19/10

(54) **SELBSTBOHRENDER ZUGBLINDNIET**
SELF-DRILLING BLIND TENSION RIVET
RIVET AVEUGLE TIRANT AUTOFOREUR

(30) Priorität: 18.12.1991 DE 4141915
(43) Veröffentlichungstag der Anmeldung: 08.12.1993
(73) Patentinhaber: SFS Industrie Holding AG, 9435 Heerbrugg (CH)
(72) Erfinder: GASSER, Daniel, CH-9445 Rebstein (CH)
(74) Vertreter: Ludescher, Hans
(86) Internationale Anmeldenummer: EP9202860
(87) Internationale Veröffentlichungsnummer: WO9312347

(56) Entgegenhaltungen:
- WO-A-88/05991
- GB-A- 1 484 260
- GB-A- 2 151 738
- US-A- 3 403 593
- US-A- 3 750 518
- US-A- 4 990 042

## Beschreibung

Die Erfindung betrifft einen selbstbohrenden Zugblindniet, bestehend aus einer Niethülse mit einem Anschlagflansch sowie einem Zugdorn, an dessen eine Aufweitanordnung für die Niethülse aufweisendem Ende ein Bohrteil angeordnet oder ausgebildet ist und an dessen anderem Ende ein Dreh- und Zugangriff mit wenigstens einer Angriffsfläche für ein Dreh- und Zugwerkzeug zum Einbohren und Setzen des Zugblindnietes ausgebildet ist, wobei die Niethülse eine zylindrische Bohrung aufweist und lose auf dem Zugdorn sitzt.

Selbstbohrende Zugblindniete sind bereits in verschiedenen Ausführungsvarianten bekannt geworden. So ist ein selbstbohrender Blindniet bekannt (DE-A-25 54 577), bei welchem der Nietdorn über seine ganze Länge zwei einander gegenüberliegende, parallele Flächen aufweist, die sich längs des Dornes erstrecken, wobei die Niethülse zu diesen Flächen des Dornes komplementäre Flächen aufweist, um dadurch eine drehfeste Verbindung zwischen dem Nietdorn und der Niethülse zu erzielen. Einerseits bedarf es dazu einer speziellen Konstruktion der Niethülse, wobei der Nietdorn und die Niethülse exakt passend aufeinander abgestimmt sein müssen, andererseits ergeben sich gerade beim Setzen des Niets, also bei Ausübung der Zugbewegung, Probleme. Beim Setzen eines Zugblindnietes sind relativ große, in axialer Richtung des Zugdornes wirkende Kräfte aufzubringen, so daß ein festes Einspannen des Nietdornes in einem entsprechenden Werkzeug erforderlich ist.

Die gleichen Probleme ergeben sich bei einer Ausführung eines selbstbohrenden Niets (DE-A-25 48 860), bei welchem der Nietdorn einen quadratischen Querschnitt aufweist. Auch bei dieser Ausführung ist beabsichtigt, daß eine drehfeste Verbindung zwischen dem Nietdorn und der Niethülse hergestellt wird, und so bedarf es auch hier einer besonderen Ausbildung des Durchgangsquerschnittes der Niethülse.

Es ist weiters eine Ausgestaltung eines Blindnietbefestigers bekannt geworden (W0 88/05991), an dessen Nietschaft Abflachungen oder Vorsprünge zum Angriff eines Bohrantriebes vorgesehen sind. Die Niethülse wird verdrehfest auf dem Nietschaft gehalten, so daß die Niethülse beim Einbohrvorgang nicht im Bohrloch stecken bleibt. Um beim Herstellen der Nietverbindung ein Rückziehen des Nietschaftes zu ermöglichen, ist bei dieser Ausgestaltung vorgesehen, daß am Nietschaft zusätzlich umlaufende Rippen ausgebildet sind. Das Setzwerkzeug muß daher Ausbildungen für die Halterung des Nietschaftes beim Drehen und wiederum andere Ausbildungen für den Zugvorgang aufweisen.

Die vorliegende Erfindung hat sich daher zur Aufgabe gestellt, den Angriffsabschnitt eines selbstbohrenden Zugblindnietes so zu gestalten, daß einerseits ein einfaches Einsetzen dieses Endbereiches des Zugdornes in ein Werkzeug möglich und andererseits zur Übertragung der Zugkräfte beim Setzen eine optimale Klemmwirkung im Werkzeug gegeben ist.

Gemäß Anspruch 1 wird dazu vorgeschlagen, daß der Zugdorn an seinem den Dreh- und Zugangriff aufweisenden Endbereich vom freien Ende ausgehend über wenigstens einen Teil der Länge des über die Niethülse frei auskragenden Bereiches mindestens einen als über den Querschnitt des in der zylindrischen Bohrung der Niethülse befindlichen Abschnittes des Zugdornes radial vorstehenden und achsparallel zum Zugdorn verlaufenden Steg ausgebildeten und die Angriffsfläche aufweisenden Angriffsabschnitt hat, und daß die Angriffsfläche mit Aufrauhungen, Querrippen, Wellungen, Noppen oder einer Rändelung versehen ist.

Auf diese Weise kann der Nietdorn ohne Probleme in das Werkzeug eingeschoben werden, da keine wie bei anderen bekannten Ausführungen notwendige Hinterschneidungen vorhanden sind. Durch die radial über den Dornquerschnitt vorstehenden Stege, Vorsprünge oder dergleichen ist eine ausreichend gute Drehmitnahme des Zugdorns beim Bohrvorgang gegeben. Gerade durch die Ausbildung wenigstens eines Teilabschnittes des Angriffsabschnittes mit Aufrauhungen, Querrippen, Wellungen, Noppen oder einer Rändelung bedarf es keiner besonders großer radialer Einspannkräfte für den Nietdorn, um die relativ großen Axialkräfte beim Setzen des Zugblindnietes übertragen zu können. Es genügt daher ein einfaches Andrücken der entsprechenden Werkzeugteile an den Angriffsabschnitt des Zugdornes, um durch die Oberflächengestaltung des entsprechenden Teilabschnittes eine ausreichende Reibungskraft bzw. eine teilweise formschlüssige Verbindung beim Setzen des Niets zu erzielen.

Durch die besondere Ausbildung des Zugdornes genügt daher beispielsweise die Anordnung von Klemmbacken, welche federbelastet in einem konischen Werkzeugteil gehalten sind.

Eine konstruktiv besonders einfache Ausführung ist dann gegeben, wenn der Angriffsabschnitt zwei einander diametral gegenüberliegende Stege aufweist und im Querschnitt annähernd rechteckig ausgebildet ist. In diesem Zusammenhang ist es von besonderem Vorteil, daß der Angriffsabschnitt eine quer zur Achsrichtung gemessene Breite aufweist, welche größer als der Durchmesser des Zugdornes ist, und eine rechtwinkelig dazu gemessene Dicke, welche kleiner als der Durchmesser des Zugdornes ist, aufweist.

Dadurch werden für die Drehmitnahme beim Bohrvorgang relativ große Angriffsflächen mit zwei einander diametral gegenüberliegenden Stegen, Vorsprüngen oder dergleichen geschaffen, und außerdem stehen relativ große Flächen zur Verfügung, welche mit Aufrauhungen, Querrippen, Wellungen, Noppen oder einer Rändelung zur Übertragung der Zugkräfte beim Setzen des Niets geeignet sind. Besonders vorteilhaft ist dabei, daß dieser ganze als Angriffsabschnitt ausgebildete Endbereich des Zugdornes praktisch von seinem freien Ende ausgehend einen durchgehend gleichen Querschnitt aufweist, so daß immer ein einfaches Einführen des Nietdornes in ein entsprechendes Werkzeug möglich ist.

Eine weitere vorteilhafte Ausgestaltung liegt darin, daß die Breite des Angriffsabschnittes wenigstens dem 1,2-fachen Durchmesser des Zugdornes entspricht. Es ist dadurch nicht nur eine ausgezeichnete Drehmitnahme, also die Übertragung des notwendigen Drehmoments beim Bohren, möglich, sondern es ergibt sich dadurch der Vorteil, daß die Niethülse nicht eigens gegen Verlieren gesichert werden muß, auch wenn diese nur lose und über einen Teilbereich axial verschiebbar auf dem Zugdorn aufgesteckt ist.

Eine weitere Ausgestaltung liegt darin, daß die am Angriffsabschnitt ausgebildeten Stege, Vorsprünge oder dergleichen von in Achsrichtung aufeinander folgenden Teilstegen bzw. Teilvorsprüngen gebildet sind. Diese Stege, Vorsprünge oder dergleichen bilden dadurch nicht nur eine optimale Angriffsmöglichkeit beim Drehantrieb, sondern bewirken durch die zwischen den Teilstegen und Teilvorsprüngen gebildeten Absätze zusätzlich eine ausgezeichnete Angriffsmöglichkeit bei der Zugbewegung.

Gerade in diesem Zusammenhang ist es auch vorteilhaft, wenn der Angriffsabschnitt durch Pressen des Endbereiches des Zugdorns nach der Vormontage der Niethülse hergestellt wird. Es kann also der freie Endbereich des Angriffsabschnittes nach der Montage der Niethülse entsprechend verformt werden, so daß die Niethülse selbst in üblicher Weise eine zylindrische Bohrung aufweisen kann und somit leicht verschieb- und verdrehbar auf dem Zugdorn gehalten ist. Durch diese Halterung der Niethülse ist es auch ohne Probleme möglich, die Niethülse farbig bzw. mit einer lackierten Oberfläche auszuführen. Es ist durch die ausgezeichnete Drehmitnahme im Bereich des Zugdornes keine Notwendigkeit gegeben, auch die Niethülse für die Übertragung des Drehmomentes heranzuziehen. Daher wird die Niethülse beim Bohrvorgang auch nicht mitgedreht, da sie lose auf dem Zugdorn sitzt. Außerdem werden die Oberfläche des zu befestigenden Teils und auch der Anschlagflansch der Niethülse selbst am Ende des Bohrvorganges keinesfalls beschädigt. Ein auf dem zu befestigenden Teil und auf der Niethülse aufgebrachter Lack wird daher nicht abgeschabt. Durch die lose Halterung der Niethülse ist es auch möglich, den Anschlagflansch mit einer beliebigen Kopfform auszuführen.

Durch die nachträgliche Verformung des Endbereiches des Zugdornes ist eine optimale Verliersicherung für die Niethülse geschaffen, wobei dadurch außerdem die optimale Querschnittsform des Angriffsabschnittes hergestellt werden kann.

Weitere Vorteile der Erfindung werden in der nachstehenden Beschreibung anhand der Zeichnung noch näher erläutert. Es zeigen:

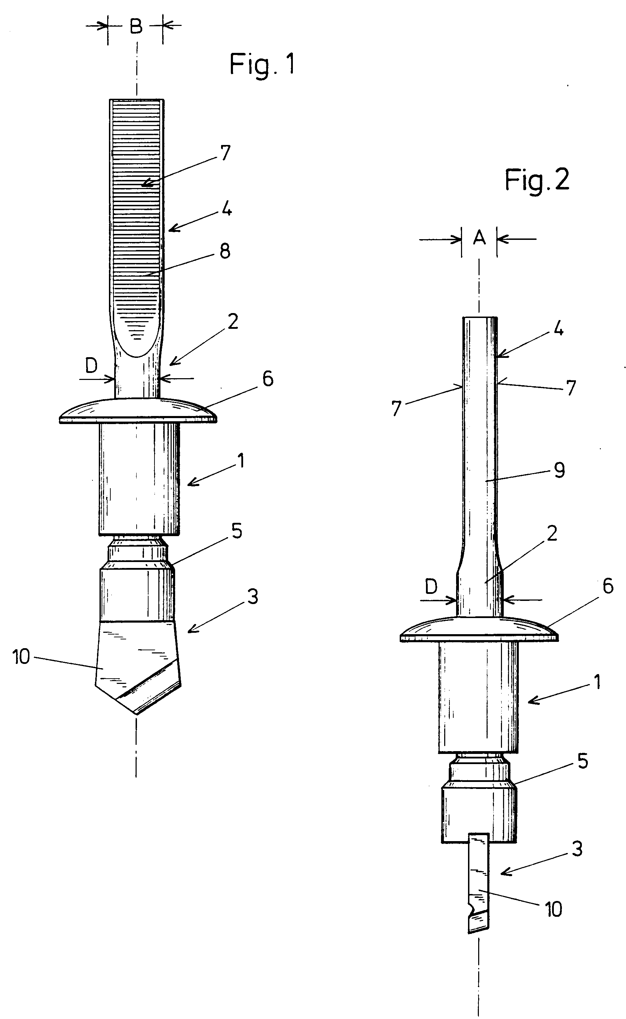

Fig. 1 eine Vorderansicht eines selbstbohrenden Zugblindnietes;
Fig. 2 eine Seitenansicht des Zugblindnietes.

Der Zugblindniet besteht im wesentlichen aus einer Niethülse 1 sowie einem Zugdorn 2, welcher an seinem einen Ende einen Bohrteil 3 und an seinem anderen Endbereich einen Angriffsabschnitt 4 aufweist. Am Übergang zwischen dem Zugdorn 2 und dem Bohrteil 3 ist eine Aufweitanordnung 5 ausgebildet, welche beim Setzen des Zugblindnietes ein Aufweiten des freien Endes der Niethülse 1 bewirkt. An der Niethülse 1 ist in üblicher Weise ein Anschlagflansch 6 vorgesehen.

Im Bereich des Angriffsabschnittes 4 ist mindestens ein Steg 9 oder ein entsprechend anders ausgeführter Vorsprung oder dergleichen vorgesehen, welcher über den Querschnitt des in der Niethülse 1 befindlichen Abschnittes des Zugdornes 2 radial vorsteht und achsparallel zum Zugdorn 2 verläuft.

Der Angriffsabschnitt 4 des Zugdornes 2 weist von seinem freien Ende ausgehend und über den größten Teil der Länge des über die Niethülse 1 frei auskragenden Bereichs wenigstens eine Abflachung 7 auf, welche zusammen mit den Stegen 9 für die Drehmitnahme des Zugdornes 2 beim Bohrvorgang dient. Vorteilhaft weist der Angriffsabschnitt 4 einen annähernd rechteckigen Querschnitt auf, so daß zumindest zwei einander diametral gegenüberliegende Stege 9 und somit auch zwei Abflachungen 7 vorgesehen sind.

Der Angriffsabschnitt 4 des Zugdornes 2 ist auf wenigstens einem Teilabschnitt desselben mit Aufrauhungen, Querrippen 8, Wellungen, Noppen oder einer Rändelung versehen. Die Querrippen 8 oder dergleichen bilden eine besondere konstruktive Gestaltung des Zugdornes 2, um die axialen Kräfte beim Setzen des Niets vom Werkzeug her besser übertragen zu können, ohne daß die den Zugdorn 2 erfassenden Klemmbacken mit übermäßig hoher Kraft radial gegen den Zugdorn gepreßt werden müssen. Eine vorteilhaftere Wirkung wird natürlich zusätzlich dann erreicht, wenn auch die entsprechenden Klemmbacken des Werkzeuges eine zu den Aufrauhungen, Querrippen, Wellungen, Noppen oder der Rändelung korrespondierende Oberfläche aufweisen.

Beim gezeigten Beispiel ist ferner vorgesehen, daß der Angriffsabschnitt 4 eine quer zur Achsrichtung gemessene Breite B, welche größer als der Durchmesser D des Zugdornes 2 ist, und ferner eine rechtwinklig dazu gemessene Dicke A, welche kleiner als der Durchmesser D des Zugdornes 2 ist, aufweist.

Bei der gezeigten Ausführung ist auch ersichtlich, daß die Breite B des Angriffsabschnittes 4 parallel zu den Abflachungen 7 gemessen wenigstens dem 1,2-fachen Durchmesser D des Zugdornes 2 entspricht. Es ist dadurch eine relativ breite Abflachung 7 für die Drehmitnahme beim Bohrvorgang möglich, und außerdem ist auch gerade dann, wenn die Querrippen 8 auf diesen breiten Abflachungen 7 vorgesehen sind, eine optimale Kraftübertragung beim Setzen des Niets möglich.

Die Herstellung des Angriffsabschnittes 4 erfolgt in konstruktiv sehr einfacher Weise durch Flachpressen des einen Endbereichs des Zugdornes 2 nach der Montage der Niethülse 1. Es sind dadurch nach der endgültigen Fertigmontage des Zugblindnietes nur noch die Angriffsabschnitte durch Verformen des Zugdornes 2 zu formen. Mit diesem Formvorgang können dann auch die Aufrauhungen, Querrippen 8, Wellungen, Noppen oder eine Rändelung hergestellt werden.

Beim gezeigten Ausführungsbeispiel sind die Querrippen 8 oder dergleichen auf den Abflachungen 7 bzw. zumindest auf einer der beiden Abflachungen 7 vorgesehen. Es wäre aber auch möglich, den Bereich der Abflachungen 7 lediglich zur Übertragung des Drehmomentes beim Bohrvorgang heranzuziehen, so daß die Querrippen 8 oder dergleichen auch an einem oder beiden Stegen 9 des Angriffsabschnittes 4 vorgesehen sein könnten. In diesem Zusammenhang ist es also auch möglich, lediglich eine Abflachung 7 vorzusehen, wobei dann in dem der Abflachung 7 gegenüberliegenden, zylindrischen Teil entsprechende Querrippen 8 oder dergleichen vorgesehen werden können.

Unter dem Begriff Abflachung ist natürlich nicht nur eine exakt ebene Fläche zu verstehen, sondern es wäre auch denkbar, diese Abflachungen 7 leicht bombiert auszuführen, so daß der Angriffsabschnitt 4 im Querschnitt z.B. annähernd ellipsenförmig ausgebildet sein könnte. Es ist auch nicht zwingend vorgeschrieben, den Querschnitt des Angriffsabschnittes 4 annähernd rechteckig auszuführen, vielmehr wäre es durchaus denkbar, den Angriffsabschnitt 4 im Querschnitt z.B. drei- oder fünfeckig auszubilden, so daß eventuell also auch mehr als zwei Stege 9, Vorsprünge oder dergleichen bzw. Abflachungen 7 am Umfang des Angriffsabschnittes 4 verteilt angeordnet sind. Es ist also auch möglich, für den Angriffsabschnitt einen unsymmetrischen Querschnitt vorzusehen, wobei auch in regelmäßiger oder unregelmäßiger Aufeinanderfolge Stege, Vorsprünge oder dergleichen sowie Rillen oder Nuten ausgebildet sein können.

Die Querrippen 8 oder dergleichen können im Bereich des Angriffsabschnittes 4 auch umfangsgeschlossen vorgesehen werden.

Wie schon erwähnt, können parallel zu einem Steg, Vorsprung oder dergleichen oder zu entsprechend mehreren Stegen 9, Vorsprüngen oder dergleichen am Angriffsabschnitt 4 eine oder mehrere Rillen oder Nuten am Zugdorn 2 ausgebildet werden.

Die am Angriffsabschnitt 4 ausgebildeten Stege 9, Vorsprünge oder dergleichen müssen nicht über deren ganze Länge durchgehend ausgeführt sein, sondern können auch aus in Achsrichtung aufeinander folgenden Teilstegen bzw. Teilvorsprüngen gebildet sein.

Es wurde in der Beschreibung erwähnt, daß die Stege, Vorsprünge oder dergleichen durch Verformung bzw. Pressen des einen Endbereiches des Zugdornes hergestellt werden. Denkbar wäre es auch, den freien Endbereich des Zugdornes beispielsweise um 180° umzubiegen, so daß dieser Endbereich wiederum parallel zum Zugdorn in die entgegengesetzte Richtung weist. Dieses umgebogene Ende bildet dann den über den Querschnitt des Zugdornes vorstehenden Steg, so daß auch dann eine ausgezeichnete Drehmitnahme und eine große Angriffsfläche bei der Zugbewegung gegeben sind. In diesem Zusammenhang ist es auch möglich, den Endbereich des Zugdornes nach Art einer Öse gebogen auszubilden, so daß die beiden einander diametral gegenüberliegenden Ausbiegungen dieser Öse die achsparallel verlaufenden und über den Querschnitt des Zugdorns vorstehenden Stege bzw. Vorsprünge bilden.

In der Zeichnung ist ein Bohrteil 3 in Form eines Bohrplättchens 10 vorgesehen. Natürlich ist die erfindungsgemäße Konstruktion nicht auf Zugblindniete mit einem solchen Bohrteil 3 beschränkt. Der Bohrteil 3 kann auf jede beliebige Art ausgeführt werden, wobei dieser auch einstückig mit dem Zugdorn 2 oder als Schweißverbindung mit diesem hergestellt und z.B. als annähernd zylindrischer Bohrteil ausgebildet werden kann.

## Patentansprüche

1. Selbstbohrender Zugblindniet, bestehend aus einer Niethülse (1) mit einem Anschlagflansch (6) sowie einem Zugdorn (2), an dessen eine Aufweitanordnung für die Niethülse (1) aufweisendem Ende ein Bohrteil (3) angeordnet oder ausgebildet ist und an dessen anderem Ende ein Dreh- und Zugangriff mit wenigstens einer Angriffsfläche für ein Dreh- und Zugwerkzeug zum Einbohren und Setzen des Zugblindnietes ausgebildet ist, wobei die Niethülse (1) eine zylindrische Bohrung aufweist und lose auf dem Zugdorn (2) sitzt und der Zugdorn (2) an seinem den Dreh- und Zugangriff aufweisenden Endbereich vom freien Ende ausgehend über wenigstens einen Teil der Länge des über die Niethülse (1) frei auskragenden Bereiches mindestens einen als über den Querschnitt des in der zylindrischen Bohrung der Niethülse (1) befindlichen Abschnittes des Zugdornes (2) radial vorstehenden und achsparallel zum Zugdorn (2) verlaufenden Steg (9) ausgebildeten und die Angriffsfläche aufweisenden Angriffsabschnitt (4) hat, und daß die Angriffsfläche mit Aufrauhungen, Querrippen (8), Wellungen, Noppen oder einer Rändelung versehen ist.

2. Zugblindniet nach Anspruch 1, dadurch gekennzeichnet, daß der Angriffsabschnitt (4) zwei einander diametral gegenüberliegende Stege (9) aufweist und im Querschnitt annähernd rechteckig ausgebildet ist.

3. Zugblindniet nach Anspruch 1 oder 2, dadurch gekennzeichnet, daß der Angriffsabschnitt (4) eine quer zur Achsrichtung gemessene Breite (B) aufweist, welche größer als der Durchmesser (D) des Zugdornes (2) ist, und eine rechtwinkelig dazu gemessene Dicke (A), welche kleiner als der Durchmesser (D) des Zugdornes (2) ist, aufweist.

4. Zugblindniet nach einem der Ansprüche 1 bis 3, dadurch gekennzeichnet, daß die Breite (B) des Angriffsabschnittes (4) wenigstens dem 1,2-fachen Durchmesser (D) des Zugdornes (2) entspricht.

5. Zugblindniet nach einem der Ansprüche 1 bis 3, dadurch gekennzeichnet, daß die am Angriffsabschnitt (4) ausgebildeten Stege (9), Vorsprünge oder dergleichen von in Achsrichtung aufeinander folgenden Teilstegen bzw. Teilvorsprüngen gebildet sind.

6. Zugblindniet nach einem der Ansprüche 1 bis 5, dadurch gekennzeichnet, daß der Angriffsabschnitt (4) durch Pressen des Endbereiches des Zugdornes (2) nach der Vormontage der Niethülse (1) hergestellt wird.

## Claims

1. A self-boring tension blind rivet, comprising a rivet sleeve (1) with an abutment flange (6) and with a tension mandrel (2), at the end of which having a flaring arrangement for the rivet sleeve (1) there is arranged or formed a boring member (3) and at the other end of which there is formed a rotary and tension engagement with at least one engagement surface for a rotary and tension tool for drilling and setting the tension blind rivet, wherein the rivet sleeve (1) has a cylindrical bore and is fitted loosely on the tension mandrel (2), and in its end region for rotary and tension engagement the tension mandrel (2), extending from the free end over at least a part of the length of the region projecting freely beyond the rivet sleeve (1), has at least one engagement portion (4) having the engagement surface and formed as a web (9) which extends across the cross-section of the portion of the tension mandrel (2) disposed in the cylindrical bore of the rivet sleeve (1) and which projects radially and extending axially parallel to the tension mandrel (2), and in that the engagement surface is provided with roughened portions, transverse ribs (8), corrugations, projections or knurling.

2. A tension blind rivet according to Claim 1, characterised in that the engagement portion (4) has two diametrically opposed webs (9) and is of approximately rectangular shape in cross-section.

3. A tension blind rivet according to Claim 1 or 2, characterised in that the engagement portion (4) is of a width (B), measured transversely to the axial direction, which is greater than the diameter (D) of the tension mandrel (2), and is of a thickness (A), measured at right angles thereto, which is smaller than the diameter (D) of the tension mandrel (2).

4. A tension blind rivet according to any one of Claims 1 to 3, characterised in that the width (B) of the engagement portion (4) corresponds at least to 1.2 times the diameter of the tension mandrel (2).

5. A tension blind rivet according to any one of Claims 1 to 3, characterised in that the webs (9), projections or the like formed on the engagement portion (4) are formed by partial webs or partial projections succeeding one another in axial direction.

6. A tension blind rivet according to any one of Claims 1 to 5, characterised in that the engagement portion (4) is produced by pressing the end region of the tension mandrel (2) after preassembly of the rivet sleeve (1).

## Revendications

1. Rivet borgne de traction autotaraudeur, consistant en une douille de rivet (1) avec un épaulement de butée (6) ainsi qu'avec un mandrin de traction (2) sur une extrémité duquel est disposée ou est constituée une pièce de forage (3), extrémité qui présente un dispositif d'élargissement pour la douille de rivet (1), et à son autre extrémité est constituée une prise de rotation et de traction avec au moins une surface de préhension pour un outil de rotation et de traction, servant à percer et mettre en place le rivet borgne de traction, la douille de rivet (1) présentant un alésage cylindrique et reposant de façon lâche sur le mandrin de traction (2) et le mandrin de traction (2) ayant, sur sa zone terminale présentant la prise de rotation et de traction en partant de l'extrémité libre sur au moins une partie de la longueur de la zone librement décolletée au-dessus de la douille de rivet (1), une section de préhension (4) constituée comme une tige (9) faisant saillie radialement sur la section transversale de la section du mandrin de traction (2) qui se trouve dans l'alésage cylindrique de la douille de rivet (1) et s'étendant parallèlement à l'axe du mandrin de traction (2) et présentant la surface de saisie, de sorte que cette surface de saisie est pourvue de rugosités, nervures transversales (8), ondulations, nappes ou d'un moletage.

2. Rivet borgne de traction selon la revendication 1, caractérisé en ce que la section de préhension (4) présente deux tiges (9) se faisant vis-à-vis diamétralement et a en section transversale une forme à peu près rectangulaire.

3. Rivet borgne de traction selon la revendication 1 ou 2, caractérisé en ce que la section de préhension (4) présente une largeur (B) mesurée perpendiculairement au sens de l'axe, largeur qui est plus grande que le diamètre (D) du mandrin de traction (2) et une épaisseur (A) mesurée perpendiculairement à cela, qui est plus petite que le diamètre (D) du mandrin de traction (2).

4. Rivet borgne de traction selon l'une des revendications 1 à 3, caractérisé en ce que largeur (B) de la section de préhension (4) correspond au moins à 1,2 fois le diamètre (D) du mandrin de traction (2).

5. Rivet borgne de traction selon l'une des revendications 1 à 3, caractérisé en ce que les tiges (9), saillies ou analogues constituées sur la section de préhension (4) sont constituées par des tiges partielles ou des saillies partielles se suivant les unes les autres dans le sens de l'axe.

6. Rivet borgne de traction selon l'une des revendications 1 à 5, caractérisé en ce que la section de préhension (4) est fabriquée en pressant la zone terminale du mandrin de traction (2) après le prémontage de la douille de rivet (1).
